# EUROPEAN PATENT SPECIFICATION

(11) **EP 3 279 111 B1**
(45) Date of publication and mention of the grant of the patent: **04.12.2019**
(21) Application number: 16771844.4
(22) Date of filing: 25.01.2016
(51) Int. Cl.: B65D 65/40, B65D 81/24

(54) **HUMIDITY CONTROLLING CONTAINER**
FEUCHTIGKEITSREGULIERENDER BEHÄLTER
RÉCIPIENT À RÉGULATION D'HUMIDITÉ

(30) Priority: 31.03.2015 JP 2015073619
(43) Date of publication of application: 07.02.2018
(73) Proprietor: Yoshino Kogyosho Co., Ltd., Tokyo 136-8531 (JP)
(72) Inventor: YAMAZAKI Atsuhiko, Matsudo-shi Chiba 270-2231 (JP); ENJOJI Taro, Matsudo-shi Chiba 270-2231 (JP)
(74) Representative: Nony
(86) International application number: PCT/JP2016/051984
(87) International publication number: WO 2016/157959

(56) References cited:
- JP-A- 2011 246 181
- JP-A- 2011 246 181
- JP-U- 3 064 497
- JP-U- 3 064 497
- US-A- 4 950 512
- US-A1- 2008 185 301

## Description

### [Technical Field]

The present invention relates to a humidity controlling container.

Priority is claimed on Japanese Patent Application No. 2015-073619, filed March 31, 2015, the content of which is incorporated herein by reference.

### [Background Art]

Contents sealed inside an accommodating chamber of a container main body may deteriorate in quality due to moisture between the time the container main body is sealed and the time a consumer opens the container. Therefore, conventionally, a configuration with a wall portion of the container main body in which a resin composition layer mixed with a moisture absorbent is provided is known as illustrated in Patent Document 1 below, for example.

### [Document of Related Art]

### [Patent Document]

[Patent Document 1]
Japanese Unexamined Patent Application, First Publication No. 2005-220149

Japanese Patent Application N°2011 246181 discloses the preamble of main claim 1.

Japanese Unexamined Patent Application N° 3064497 and US4950512 each discloses a humidity controlling container with an intermediate layer of polyethylene.

### [Summary of Invention]

### [Technical Problem]

However, in the conventional humidity controlling container, it may be difficult to maintain humidity of an accommodating chamber at a low level because a resin composition layer absorbs not only humidity of the accommodating chamber but also humidity of outside air.

In consideration of the above-mentioned circumstances, the present invention is directed to providing a humidity controlling container in which humidity of the accommodating chamber can reliably be maintained at a low level.

### [Solution to Problem]

A humidity controlling container of the present invention includes an accommodating chamber in which contents are accommodated, wherein a wall portion thereof includes an innermost layer which defines the accommodating chamber, a first resin composition layer which surrounds the innermost layer from a side opposite to the accommodating chamber, a second resin composition layer which surrounds the first resin composition layer from the side opposite to the accommodating chamber, and an outermost layer which surrounds the second resin composition layer from the side opposite to the accommodating chamber, the first resin composition layer has a higher dehumidification capacity for a space of the same volume than the second resin composition layer, the second resin composition layer has a larger absorbable amount of water than the first resin composition layer, the innermost layer and the outermost layer are formed of an olefin-based resin, the first resin composition layer and the second resin
composition layer are formed of an olefin-based resin mixed with a moisture absorbent, and an intermediate layer formed of an olefin-based resin is interposed between the first resin composition layer and the second resin composition layer.

According to the invention, the thickness of the innermost layer is the smallest of all the layers of the wall portion and the thickness of the first resin composition layer is the largest.

According to the present invention, since the second resin composition layer surrounds the first resin composition layer from the side opposite to the accommodating chamber and moisture from outside air is absorbed by the second resin composition layer even when moisture from outside air penetrates the outermost layer, moisture from outside air reaching the first resin composition layer can be suppressed. Moreover, since the second resin composition layer has a larger absorbable amount of water than the first resin composition layer, it is possible for the second resin composition layer to absorb a large amount of moisture, for example, even when the period from sealing to unsealing becomes long or the humidity controlling container is placed in an environment with high humidity, and thereby moisture from outside air reaching the first resin composition layer can be reliably suppressed.

Therefore, since moisture from outside air is not easily absorbed by the first resin composition layer having a higher dehumidification capacity than the second resin composition layer, this allows the first resin composition layer to absorb moisture intensively in the accommodating chamber and thereby humidity of the accommodating chamber can be reliably maintained at a low level.

Also, transfer of moisture absorbed by one side of the first resin composition layer and the second resin composition layer to the other side can be prevented by the intermediate layer between the first resin composition layer and the second resin composition layer, and thereby it is possible for moisture from outside air to be reliably absorbed by the second resin composition layer and for moisture of the accommodating chamber to be absorbed by the first resin composition layer.

Also, since the innermost layer, the first resin composition layer, the intermediate layer, the second resin composition layer, and the outermost layer are formed of an olefin-based resin, a solid bond between these layers can be easily and reliably achieved.

Here, a thickness of the intermediate layer may be smaller than each thickness of the first resin composition layer and the second resin composition layer.

In this case, since the thickness of the intermediate layer is smaller than each thickness of the first resin composition layer and the second resin composition layer, increases in weight, cost and size of the humidity controlling container can be suppressed.

Also, the first resin composition layer may have a higher dehumidification capacity per unit weight than the second resin composition layer and the second resin composition layer may have a larger absorbable amount of water per unit weight than the first resin composition layer.

In this case, since the first resin composition layer has a higher dehumidification capacity per unit weight than the second resin composition layer and the second resin composition layer has a larger absorbable amount of water per unit weight than the first resin composition layer, increases in weight, cost and size of the humidity controlling container can be reliably suppressed.

### [Effects of Invention]

According to the present invention, humidity of an accommodating chamber can be reliably maintained at a low level.

### [Brief Description of Drawings]

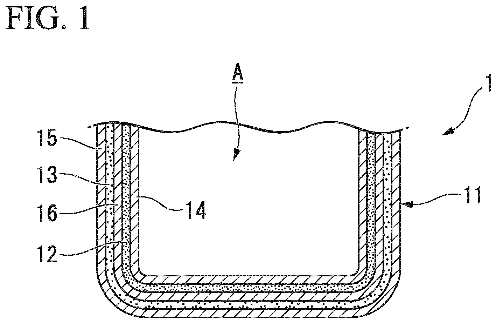

Fig. 1 is a partial longitudinal sectional view of a humidity controlling container illustrated as one embodiment according to the present invention.

### [Description of Embodiments]

Hereinafter, one embodiment of the present invention will be described with reference to the drawings.

As illustrated in Fig. 1, a humidity controlling container 1 according to the present embodiment includes an accommodating chamber A in which contents are accommodated and a wall portion 11 includes an innermost layer 14 which defines the accommodating chamber A, a first resin composition layer 12 which surrounds the innermost layer 14 from a side opposite to the accommodating chamber A, a second resin composition layer 13 which surrounds the first resin composition layer 12 from the side opposite to the accommodating chamber A, and an outermost layer 15 which surrounds the second resin composition layer 13 from the side opposite to the accommodating chamber A.

Here, the wall portion 11 of the humidity controlling container 1 is formed in a cylindrical shape with a bottom, and the first resin composition layer 12, the second resin composition layer 13, the outermost layer 15, and the innermost layer 14 are also formed in a cylindrical shape with a bottom.

The outermost layer 15 and the innermost layer 14 are formed of an olefin-based resin such as polyethylene, polypropylene, or a cyclic olefin, which do not contain a moisture absorbent, for example.

The first resin composition layer 12 and the second resin composition layer 13 are formed of an olefin-based resin such as polyethylene or polypropylene, in which a moisture absorbent is mixed, for example.

Examples of the moisture absorbent include one of calcium oxide, magnesium sulfate, a molecular sieve, silica gel, calcium chloride and silica alumina gel, or a mixture of a plurality thereof. In addition, the molecular sieve is a crystalline zeolite and is represented by Expression (1) below.

M_{2/n}O·Al2O3·xSiO₂·yH₂O ... (1)

In Expression (1), "M" represents a metal cation (sodium or the like, for example) and "n" represents an atomic value.

The first resin composition layer 12 has a higher dehumidification capacity for a space of the same volume than the second resin composition layer 13. In addition, the dehumidification capacity refers to an ability to lower and maintain humidity of a space of the same volume at the lowered level. Also, the second resin composition layer 13 has a larger absorbable amount of water than the first resin composition layer 12. The absorbable amount of water is an amount of water that can be absorbed.

Further, in the present embodiment, the first resin composition layer 12 has a higher dehumidification capacity per unit weight than the second resin composition layer 13, and the second resin composition layer 13 has a larger absorbable amount of water per unit weight than the first resin composition layer 12.

A moisture absorbent contained in the first resin composition layer 12 has a higher dehumidification capacity per unit weight than a moisture absorbent contained in the second resin composition layer 13, and the moisture absorbent contained in the second resin composition layer 13 has a larger absorbable amount of water per unit weight than the moisture absorbent contained in the first resin composition layer 12.

Calcium oxide and the like are examples of the moisture absorbent contained in the first resin composition layer 12, and magnesium sulfate and the like are examples of the moisture absorbent contained in the second resin composition layer 13. The moisture absorbents are mixed in the first resin composition layer 12 and the second resin composition layer 13 in an amount of 50 wt% or more.

In the present embodiment, an intermediate layer 16 formed of an olefin-based resin which does not contain a moisture absorbent is interposed between the first resin composition layer 12 and the second resin composition layer 13. The intermediate layer 16 is formed in a cylindrical shape with a bottom as in the first resin composition layer 12, the second resin composition layer 13, the outermost layer 15, and the innermost layer 14.

A thickness of the intermediate layer 16 is smaller than the thicknesses of either of the first resin composition layer 12 or the second resin composition layer 13. In addition, the thickness of the intermediate layer 16 is in a range of about 30 µm to 100 µm, for example. In the humidity controlling container 1, the thickness of the innermost layer 14 is the smallest and the thickness of the first resin composition layer 12 is the largest.

For example, the outermost layer 15 and the intermediate layer 16 are formed of high density polyethylene, the innermost layer 14 is formed of low density polyethylene, the first resin composition layer 12 is formed of polyethylene mixed with 60 wt% calcium oxide, and the second resin composition layer 13 is formed of polyethylene mixed with 60 wt% magnesium sulfate.

In the configuration, for example, thicknesses of the outermost layer 15 and the intermediate layer 16 are equal to each other, the thickness of the innermost layer 14 is half the thickness of each of the outermost layer 15 and the intermediate layer 16, the thickness of the first resin composition layer 12 is about 5.5 times the thickness of each of the outermost layer 15 and the intermediate layer 16, and the thickness of the second resin composition layer 13 is about twice the thickness of each of the outermost layer 15 and the intermediate layer 16.

As described above, according to the humidity controlling container 1 of the present embodiment, since the second resin composition layer 13 surrounds the first resin composition layer 12 from the side opposite to the accommodating chamber A and moisture from outside air is absorbed by the second resin composition layer 13 even when moisture from outside air penetrates through the outermost layer 15, moisture from outside air reaching the first resin composition layer 12 can be suppressed. Moreover, since the second resin composition layer 13 has a larger absorbable amount of water than the first resin composition layer 12, it is possible for the second resin composition layer 13 to absorb a large amount of moisture even when the period from sealing to unsealing becomes long or the humidity controlling container 1 is placed in an environment with high humidity. Accordingly, moisture from outside air reaching the first resin composition layer 12 can be reliably suppressed.

Therefore, since moisture from outside air is not easily absorbed by the first resin composition layer 12 having higher dehumidification capacity than the second resin composition layer 13, this allows the first resin composition layer 12 to absorb moisture intensively in the accommodating chamber A and thereby the humidity of the accommodating chamber A can be reliably maintained at a low level.

Also, transfer of moisture absorbed by one side of the first resin composition layer 12 and the second resin composition layer 13 to the other side can be prevented by the intermediate layer 16 between the first resin composition layer 12 and the second resin composition layer 13. Therefore, it is possible for moisture from outside air to be reliably absorbed by the second resin composition layer 13 and for moisture of the accommodating chamber A to be absorbed by the first resin composition layer 12.

Also, since the innermost layer 14, the first resin composition layer 12, the intermediate layer 16, the second resin composition layer 13, and the outermost layer 15 are formed of olefin-based resins, a solid bond between these layers can be easily and reliably achieved.

Also, since the thickness of the intermediate layer 16 is smaller than each thickness of the first resin composition layer 12 and the second resin composition layer 13, increases in weight, cost and size of the humidity controlling container 1 can be suppressed.

Also, since the first resin composition layer 12 has a higher dehumidification capacity per unit weight than the second resin composition layer 13 and the second resin composition layer 13 has a larger absorbable amount of water per unit weight than the first resin composition layer 12, increases in weight, cost and size of the humidity controlling container 1 can be reliably suppressed.

In addition, the technical scope of the present invention is not limited to the above embodiment, and various changes can be made without departing from the scope of the invention as defined by the claims.

For example, the thickness of the intermediate layer 16 is made smaller than each thickness of the first resin composition layer 12 and the second resin composition layer 13 in the present embodiment but may be made equal to or larger than each thickness of the first resin composition layer 12 and the second resin composition layer 13.

Also, the dehumidification capacity per unit weight of the first resin composition layer 12 may be equal to or smaller than that of the second resin composition layer 13, or the absorbable amount of water per unit weight of the second resin composition layer 13 may be equal to or smaller than that of the first resin composition layer 12.

In addition, the components in the above-described embodiment can be appropriately replaced with well-known components without departing from the scope of the invention as defined by the claims.

### [Industrial Applicability]

According to the present invention, humidity of an accommodating chamber can be reliably maintained at a low level.

### [Reference Signs List]

- 1: Humidity controlling container
- 11: Wall portion
- 12: First resin composition layer
- 13: Second resin composition layer
- 14: Innermost layer
- 15: Outermost layer
- 16: Intermediate layer
- A: Accommodating chamber

## Claims

1. A humidity controlling container (1) comprising an accommodating chamber (A) in which contents are accommodated,
wherein a wall portion (11) thereof includes:
an innermost layer (14) which defines the accommodating chamber;
a first resin composition layer (12) which surrounds the innermost layer from a side opposite to the accommodating chamber;
a second resin composition layer (13) which surrounds the first resin composition layer from the side opposite to the accommodating chamber; and
an outermost layer (15) which surrounds the second resin composition layer from the side opposite to the accommodating chamber,
the first resin composition layer has a higher dehumidification capacity for a space of the same volume than the second resin composition layer, and the second resin composition layer has a larger absorbable amount of water than the first resin composition layer;
the innermost layer and the outermost layer are formed of an olefin-based resin;
the first resin composition layer and the second resin composition layer are formed of an olefin-based resin mixed with a moisture absorbent; and
**characterized in that** an intermediate layer (16) formed of an olefin-based resin is interposed between the first resin composition layer and the second resin composition layer and **in that** the thickness of the innermost layer is the smallest of all the layers of the the wall portion and **in that** the thickness of the first resin composition layer (12) is the largest.

2. The humidity controlling container (1) according to claim 1, wherein a thickness of the intermediate layer is smaller than each thickness of the first resin composition layer and the second resin composition layer.

3. The humidity controlling container (1) according to claim 1 or 2, wherein:
the first resin composition layer has a higher dehumidification capacity per unit weight than the second resin composition layer; and
the second resin composition layer has a larger absorbable amount of water per unit weight than the first resin composition layer.

4. The humidity controlling container (1) according to any one preceding claims, wherein the intermediate layer is formed of high density polyethylene, and
the innermost layer is formed of low density polyethylene.

## Patentansprüche

1. Feuchtigkeitsregulierender Behälter (1), der eine Aufnahmekammer (A) umfasst, in dem Inhalte aufgenommen sind,
wobei ein Wandabschnitt (11) davon Folgendes aufweist:
eine innerste Schicht (14), die die Aufnahmekammer
definiert;
eine erste Harzzusammensetzungsschicht (12), die die innerste Schicht von einer Seite gegenüber der Aufnahmekammer aus umgibt;
eine zweite Harzzusammensetzungsschicht (13), die die erste Harzzusammensetzungsschicht von der Seite gegenüber der Aufnahmekammer aus umgibt; und
eine äußerste Schicht (15), die die zweite Harzzusammensetzungsschicht von der Seite gegenüber der Aufnahmekammer aus umgibt,
die erste Harzzusammensetzungsschicht eine höhere Entfeuchtungsleistung für einen Raum mit demselben Volumen aufweist als die zweite Harzzusammensetzungsschicht, und die zweite Harzzusammensetzungsschicht eine größere absorbierbare Wassermenge aufweist als die erste Harzzusammensetzungsschicht;
die innerste Schicht und die äußerste Schicht aus einem Harz auf Olefinbasis gebildet sind;
die erste Harzzusammensetzungsschicht und die zweite Harzzusammensetzungsschicht aus einem Harz auf Olefinbasis gebildet sind, das mit einem feuchtigkeitsabsorbierenden Mittel gemischt ist; und
**dadurch gekennzeichnet, dass** eine Zwischenschicht (16) aus einem Harz auf Olefinbasis zwischen der ersten Harzzusammensetzungsschicht und der zweiten Harzzusammensetzungsschicht angeordnet ist, und dadurch, dass die Dicke der innersten Schicht die geringste von sämtlichen Schichten des Wandabschnitts ist, und dadurch, dass die Dicke der ersten Harzzusammensetzungsschicht (12) die stärkste ist.

2. Feuchtigkeitsregulierender Behälter (1) nach Anspruch 1, wobei eine Dicke der Zwischenschicht geringer ist als die Dicke von sowohl der ersten Harzzusammensetzungsschicht als auch der zweiten Harzzusammensetzungsschicht.

3. Feuchtigkeitsregulierender Behälter (1) nach Anspruch 1 oder 2, wobei:
die erste Harzzusammensetzungsschicht eine höhere Entfeuchtungsleistung pro Gewichtseinheit aufweist als die zweite Harzzusammensetzungsschicht; und
die zweite Harzzusammensetzungsschicht eine größere absorbierbare Wassermenge pro Gewichtseinheit aufweist als die erste Harzzusammensetzungsschicht.

4. Feuchtigkeitsregulierender Behälter (1) nach einem der vorhergehenden Ansprüche, wobei die Zwischenschicht aus Polyethylen hoher Dichte gebildet ist, und
die innerste Schicht aus Polyethylen niedriger Dichte gebildet ist.

## Revendications

1. Récipient à régulation d'humidité (1) comprenant une chambre de réception (A) dans laquelle le contenu est réceptionné,
une partie de paroi (11) de celui-ci comprenant :
une couche la plus intérieure (14) qui définit la chambre de réception ;
une première couche de composition de résine (12) qui entoure la couche la plus intérieure d'un côté opposé à la chambre de réception ;
une seconde couche de composition de résine (13) qui entoure la première couche de composition de résine du côté opposé à la chambre de réception ; et
une couche la plus extérieure (15) qui entoure la seconde couche de composition de résine du côté opposé à la chambre de réception,
la première couche de composition de résine ayant une capacité de déshumidification supérieure pour un espace du même volume que la seconde couche de composition de résine, et la seconde couche de composition de résine ayant une plus grande quantité absorbable d'eau que la première couche de composition de résine ;
la couche la plus intérieure et la couche la plus extérieure étant formées d'une résine à base d'oléfine ;
la première couche de composition de résine et la seconde couche de composition de résine étant formées d'une résine à base d'oléfine mélangée à un absorbant d'humidité ; et
**caractérisé en ce qu'**une couche intermédiaire (16) formée d'une résine à base d'oléfine est interposée entre la première couche de composition de résine et la seconde couche de composition de résine et **en ce que** l'épaisseur de la couche la plus intérieure est la plus petite de toutes les couches de la partie de paroi, et **en ce que** l'épaisseur de la première couche de composition de résine (12) est la plus grande.

2. Récipient à régulation d'humidité (1) selon la revendication 1, une épaisseur de la couche intermédiaire étant inférieure à chaque épaisseur de la première couche de composition de résine et de la seconde couche de composition de résine.

3. Récipient à régulation d'humidité (1) selon la revendication 1 ou 2,
la première couche de composition de résine ayant une capacité de déshumidification par unité de poids supérieure à celle de la seconde couche de composition de résine ; et
la seconde couche de composition de résine ayant une plus grande quantité absorbable d'eau par unité de poids que la première couche de composition de résine.

4. Récipient à régulation d'humidité (1) selon l'une quelconque des revendications précédentes, la couche intermédiaire étant formée de polyéthylène haute densité et la couche la plus intérieure étant formée de polyéthylène basse densité.
